# EUROPEAN PATENT SPECIFICATION

(11) **EP 3 050 533 B1**
(45) Date of publication and mention of the grant of the patent: **26.07.2023**
(21) Application number: 14847856.3
(22) Date of filing: 22.08.2014
(51) Int. Cl.: A61C 13/08, A61C 13/20

(54) **METHOD FOR MANUFACTURING DENTAL RESIN BLOCK**
VERFAHREN ZUR HERSTELLUNG EINES ZAHNÄRZTLICHEN KUNSTHARZBLOCKS
PROCÉDÉ POUR FABRIQUER UN BLOC DE RÉSINE DENTAIRE

(30) Priority: 24.09.2013 JP 2013197115
(43) Date of publication of application: 03.08.2016
(73) Proprietor: GC Corporation, Bunkyo-ku Tokyo 113-0033 (JP)
(72) Inventor: NAKAYAMA, Mizuki, Tokyo 174-8585 (JP); TAKAGI, Nobuhito, Tokyo 174-8585 (JP)
(74) Representative: Müller-Boré & Partner Patentanwälte PartG mbB
(86) International application number: PCT/JP2014/071997
(87) International publication number: WO 2015/045698

(56) References cited:
- WO-A1-2009/154301
- WO-A1-2011/162286
- JP-A- H10 323 353
- JP-A- 2004 516 066
- US-A- 3 609 296
- US-A- 4 771 162
- US-A- 5 990 195
- US-A1- 2006 255 039
- US-A1- 2011 229 858
- US-A1- 2013 049 241
- US-B1- 6 660 194

## Description

### Technical Field

The present invention relates to a method for manufacturing a dental resin block that is used in a case where a dental prosthesis such as an inlay and a crown is made by cutting with a CAD/CAM machine.

### Background Art

When a case in odontotherapy using an inlay, a crown or the like requires aesthetics, generally applied is: restoration by a filling of dental composite resin; or restoration with a dental prosthesis such as a ceramic inlay, a resin faced cast crown, a porcelain-fused-to-metal crown and an all-ceramic crown.

In the case of restoration by a filling of dental composite resin however, pasty dental composite resin is polymerized to cure in the cavity in a tooth. Thus, it is inevitable that unpolymerized monomers remain and as a result, the problem of tooth pulp stimulation exists. In the case of a dental prosthesis that can be made outside an oral cavity by polymerizing monomers sufficiently, not only a skilled technician but also an enormous amount of time and money is required because each patient has his/her own shape of the oral cavity and site for which a prosthesis is to be made and moreover, it is required that a completed dental prosthesis has an extremely high dimensional precision of several microns.

For the above, there have been more and more cases where CAD/CAM machines are applied to make dental prostheses in recent years. With a CAD/CAM machine, a dental prosthesis such as a crown and a bridge is designed on a screen by means of a computer, and the dental prosthesis is made by cutting. Whereby, constant quality dental prostheses can be supplied rapidly and stably.

A dental resin block that is dental resin formed into a block is used in cutting with a CAD/CAM machine as a material before a shape is cut therefrom. This dental resin block is, for example, constituted by acrylic resin polymers formed into a block that are made of a material including inorganic fillers so that the inorganic fillers are within the range of 20 wt% and 70 wt%; the average grain size of the inorganic fillers is within the range of 0.001 µm and 0.04 µm; as described in Patent Literature 1.

### Citation List

### Patent Literature

Patent Literature 1: JP 10-323353 A
Document US 6 660 194 B1 discloses a similar method forming part of the prior art, wherein the mold used is made of gypsum.
Document US2013/049241A1 discloses a further method forming part of the prior art.

### Summary of Invention

### Technical Problem

In this method, a blocky dental resin material is obtained by pressurizing and heating a dental resin material before polymerization under conditions of pressure within the range of 50 MPa and 300 MPa and temperature within the range of 100°C and 200°C, and polymerizing and curing the dental resin material. Thus, it is necessary to pack paste before polymerization into a mold and pressurize it with a heated press.

This dental resin material is acrylic resin including inorganic fillers so that the inorganic fillers are within the range of 20 wt% and 70 wt%; the average grain size of the inorganic fillers is within the range of 0.001 µm and 0.04 µm. Thus, the dental resin material before polymerization (cure) has very high viscosity. Whereby, there is a problem of involving bubbles when the dental resin material is pressurized and heated, and polymerized as described above. In addition, cracks sometimes appear upon cure. It cannot be said that a dental resin block that involves bubbles or where cracks appear like the above has good quality. Chipping, or breaking chips off, easily occurs to such a dental resin block upon cutting in CAM, and thus, a high-precision dental prosthesis cannot be obtained.

An object of the present invention is to provide a method for manufacturing a dental resin block where bubbles and cracks are difficult to appear.

### Solution to Problem

The inventor of the present invention has extensively made a study to solve the above problem. As a result, the inventor has found a view that: a composition before cure is put into a mold which is not made of metal; the composition with the mold is put into a vessel with which whole of the composition and the mold can have a predetermined pressure, and pressurized and heated, to be polymerized under the situation where the pressure inside and outside the mold is the same; and whereby, appearance of bubbles and cracks can be held down, and has completed this invention. The present invention is defined by appended claim 1 and comprises a method for manufacturing a dental resin block, the method comprising:injecting a material before cure that is to be a dental resin block into a mold that has an aperture configured to make the pressure inside and outside the mold same and wherein the mold is formed by synthetic resin;putting the mold with the material before cure that is to be a dental resin block into a vessel with which whole of the composition and the mold can have a predetermined pressure, and pressurizing the mold and the material before cure, which is injected into the mold, with a pressure of 1.0 MPa or more; and heating the mold and the material before cure, which is injected into the mold, with a temperature of 60°C or more, at the same time when the pressure has been raised, to be polymerized under the situation where the pressure inside and outside the mold is the same.

### Advantageous Effects of Invention

By the method for manufacturing a dental resin block according to the present invention, bubbles and cracks can be decreased, and a high quality dental resin block can be provided, so that, for example, chipping does not occur in making.

### Brief Description of Drawings

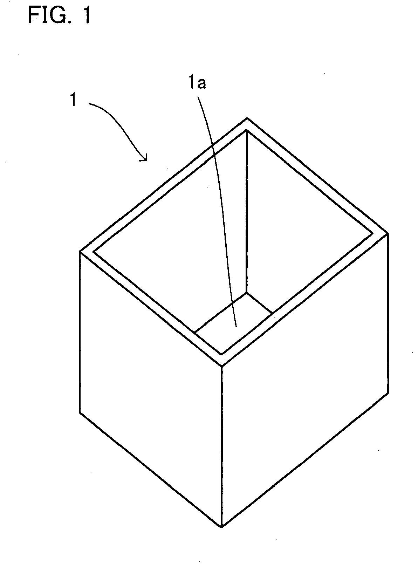

[FIG. 1] is an exterior perspective view of a mold according to one exemplification.

### Description of Embodiments

The above described operation and advantage of the present invention will be apparent from the following embodiment explained. It is noted that the present invention is not limited to any embodiment.

First, a dental resin material used for this embodiment will be explained. Then, a method for manufacturing a dental resin block using this material will be explained.

For a dental resin material used here, methacrylate compounds or acrylate compounds, which are often used for a dental material conventionally, can be used. As a methacrylate compound or an acrylate compound, exemplified can be: methylmethacrylate, ethylmethacrylate, isopropylmethacrylate, 2-hydroxyethylmethacrylate, 3-hydroxypropylmethacrylate, 2-hydroxy-1,3-dimethacryloxypropane, n-butylmethacrylate, isobutylmethacrylate, tetrahydrofurfurylmethacrylate, glycidylmethacrylate, 2-methoxyethylmethacrylate, 2-ethylhexylmethacrylate, benzylmethacrylate, phenylmethacrylate, phenoxyethylmethacrylate, 2,2-bis(methacryloxyphenyl)propane, 2,2-bis[4-(2-hydroxy-3-methacryloxypropoxy)phenyl]propane, 2,2-bis(4-methacryloxydiethoxyphenyl)propane, 2,2-bis(4-methacryloxypolyethoxyphenyl)propane, ethyleneglycoldimethacrylate, diethyleneglycoldimethacrylate, triethyleneglycoldimethacrylate, butyleneglycoldimethacrylate, neopentylglycoldimethacrylate, 1,3-butanedioldimethacrylate, 1,4-butanedioldimethacrylate, 1,6-hexanedioldimethacrylate, trimethylolpropanetrimethacrylate, trimethylolethanetrimethacrylate, pentaerythritoltrimethacrylate, trimethylolmethanetrimethacrylate, pentaerythritoltetramethacrylate, di-2-methacryloxyethyl-2,2,4-trimethylhexamethylenedicarbamate, 1,3,5-tris[1,3-bis(methacryloyloxy)-2-propoxycarbonylaminohexane]-1,3,5-(1H,3H,5H) triazin-2,4,6-trione and acrylate thereof. Either any one of these methacrylate and acrylate, or a mixture thereof may be used depending on the necessity.

Because these compounds are polymerized and used in the form of a block, a polymerization catalyst is also used. Since pressurizing and heating are carried out to mold a material in the present invention, a heat polymerization catalyst is preferable as a polymerization catalyst. Organic peroxide, azo compounds, etc. are used as a heat polymerization initiator (catalyst). Specifically, listed are: benzoylperoxide, ketoneperoxide, peroxyketal, hydroperoxide, dialkylperoxide, diacylperoxide, peroxyester, peroxydicarbonate, 2,2'-azobisisobutyronitrile, 2,2'-azobis-2,4-dimethylvaleronitrile, 4,4'-azobis-4-cyanovaleric acid, 1,1'-azobis-1-cyclohexanecarbonitrile, dimethyl-2,2'-azobisisobutyrate, 2,2'-azobis(2-aminopropane)dihydrochloride, etc. Either any one of them, or a mixture thereof may be used.

It is preferable that fillers are contained in a dental resin material. Inorganic fillers whose average grain size is within the range of 0.01 µm and 2 µm are preferable as the fillers. Colloidal silica is common inorganic fillers whose average grain size is within the range of 0.01 µm and 0.04 µm. For example, AEROSIL OX 50 (average grain size: 0.04 µm), AEROSIL R 972 (average grain size: 0.016 µm), etc. from NIPPON AEROSIL CO., LTD. can be used. Powdered glass is common inorganic fillers whose average grain size is within the range of 0.1 µm and 2 µm. Composition thereof is not limited specifically. Preferable are: vitreous silica, aluminosilicate glass, glass containing alkaline earth metal atoms such as calcium, strontium and barium, which have radiopacity, zinc glass, lead glass and so on. It is desirable to use powdered glass that the surfaces of which is silanized. Generally, powdered glass is silanized by a regular method with organosilicic compounds such as γ-methacryloxypropyltrimethoxysilane as a surface treatment agent, to be used. If less than 0.1 wt% of inorganic fillers whose average grain size is within the range of 0.01 µm and 0.04 µm is contained, sufficient thickening effect is difficult to be obtained. If more than 2 wt% thereof is contained, resin paste in making a dental resin material is hardened and bubbles are easy to be mixed into resin polymers, which is not proper. If less than 1 wt% of inorganic fillers whose average grain size is within the range of 0.1 µm and 2 µm is contained, sufficient abrasion resistance is difficult to be obtained. If more than 80 wt% thereof is contained, resin paste in making a dental resin material is hardened and bubbles are easy to be mixed into resin polymers, which is not proper.

Organic-inorganic composite fillers can be contained depending on required properties. This organic-inorganic composite fillers are the above described inorganic fillers, whose average grain size is within the range of 0.01 µm and 2 µm, mixed with monomers of methacrylate or acrylate that have at least one unsaturated double bond, and cured and powdered, to be adjusted so as to have the average grain size within the range of 5 µm and 50 µm. It is proper in this case that organic-inorganic composite fillers of no less than 1 wt% and no more than 40 wt% are contained. If less than 1 wt% of organic-inorganic composite fillers is contained, the effect of improving surface lubricity and abrasion resistance is not recognized. If more than 40 wt% thereof is contained, the mechanical strength gets decreased.

An ultraviolet absorber, a coloring agent, a polymerization inhibitor, etc. may be used in extremely small quantities if necessary.

The method for manufacturing a dental resin block using the dental resin material will be described.

Manufacture of a dental resin block is: to inject the above described pasty dental resin material into a mold of a desired shape (for example, FIG. 1 depicts a mold 1 of rectangular box like shape that has a bottom 1a on one side. It is noted that the shape of the mold is not specifically limited); to pressurize it to a pressure within the range of 1.0 MPa and 8 MPa; and heat it to a temperature within the range of 60°C and 200°C at the same time when the pressure has been raised; and thereby, to polymerize and cure the material, to be molded into the shape of a block.

A material to constitute the mold is decided to be except metal. The invention uses synthetic resin as a material in view of its dimensional precision as a mold and moldability. Thermoplastic resin and silicone resin are more preferable. Thus, it is possible to drastically reduce the appearance of cracks on a manufactured dental resin block.

Resin that has been widely used in general industry conventionally can be used for thermoplastic resin used here: especially, used can be; polyethylene, polypropylene, polyvinylchloride, polystyrene, polyvinylacetate, polytetrafluoroethylene, acrylonitrilebutadienestyrene resin and acrylic resin.

A step of pressurizing the mold and the material before cure, which is injected into the mold, with a pressure of 1.0 MPa or more, and a step of heating the mold and the material before cure, which is injected into the mold, with a temperature within the range of 60°C and 200°C constitute a step of putting a composition into the mold, which is not made of metal; and putting the composition with the mold into a vessel with which whole of the composition and the mold can have a predetermined pressure, and pressurizing and heating the composition with the mold, to polymerize the composition under the situation where the pressure inside and outside the mold is the same.

A pressurized heating vessel such as an autoclave and a pressure vessel, which is used in industry, can be used as such a vessel. Means for making the pressure inside and outside the mold same in this step is: to provide a clear aperture for the mold; concerning a mating mold of a cavity and a core, for example, to inject a composition into a concavity of the cavity, put the core so that the core floats on the composition, and pressurize and heat them as they are in the vessel, and so on. Also taken may be a method of injecting a composition into a rectangular parallelepipedic vessel whose top is opened, putting a thin resin film such as wrap over the top surface of the composition through the top aperture, and pressurizing and heating them.

As to pressure, if pressure is under 1.0 MPa, the mixture of bubbles cannot be suppressed enough, and the possibility of the appearance of bubbles that may cause chipping is increased. On the other hand, even if pressure is over 8 MPa, there is no influence on properties of a dental resin block themselves. However, it is not recognized to further improve the effect of raising pressure, and it gets difficult to keep high pressure.

As to heating temperature, if heating temperature is less than 60°C, there is a possibility that unpolymerized monomers remain, which is not proper. It is preferable that heating temperature is 80°C or over in view of avoiding long polymerization time and improving productivity. On the other hand, if heating temperature is over 200°C, a material for packing that is used for the above described pressurized heating vessel is limited, which is not proper.

Manufacturing a dental resin block under the conditions described above allows a dental resin block of good moldability and less cracks and bubbles to be obtained. The quality and productivity can be compatible if it generally takes time no less than ten minutes and no more than ninety minutes to carry out both pressurization and heating, to carry out polymerization and cure although it depends on the size of a block. Here, while the shape of a block is normally a rectangular parallelepiped or a cylinder, it is preferable to make the shape thereof closely resemble that of an inlay or a crown in advance because cuts can be reduced to be a little in cutting.

A dental prosthesis will be made as follows for example, using the dental resin block obtained by the above way.

First, impressions of an abutment tooth side and an opposing tooth side in the oral cavity of a patient are taken using a dental impression material. Impressions of upper and lower jaws may be taken either at the same time, or separately.

Next, based on the taken impressions, plaster casts are made.

Then, the plaster casts are measured by a contact or non-contact meter, to obtain three dimensional coordinates data on the shape of the oral cavity, and this data is stored in a memory in a computer as digital signals.

After that, the shape of the patient's abutment tooth is graphically displayed on a monitor, screen of the computer in a wireframe or the like, using the three dimensional coordinates data stored in the memory. The positional relationship with the opposing tooth is graphically reproduced on the monitor by: setting certain reference points at the plaster casts of the upper and lower jaws in advance; and matching the reference points with each other by means of the data on the measured shape of the plaster cast of the upper jaw and the data on the measured shape of the plaster cast of the lower jaw.

The forms of an inlay or crown is drawn and designed based on the shape of the abutment tooth and the shape of the opposing tooth graphically displayed on the monitor. This design can be made much easier if pre-registered standard data on inlays and crowns is used. A cement space may be made by offsetting the inner surface side of an inlay or crown by any size if necessary. After the design of an inlay or crown is finished and three dimensional coordinates data is obtained via the above, processing commands are transmitted from the computer to an NC processing machine. The processing machine receiving the commands carries out cutting on the above described dental resin block to make an inlay or crown according to the commands. Characterization such as making stains may be carried out using dental hard resin in order to adjust the color tone with that of remaining teeth of the patient if necessary.

According to the dental resin block manufactured by means of the present invention, cracks and bubbles appears a little. Thus, faults such as chipping are difficult to occur in making, and a high quality dental prosthesis can be made.

### Examples

In the following examples, dental resin blocks were manufactured according to Examples 1 to 4 and Comparative Examples 1 to 3, which were to be compared with Examples 1 to 4, and the qualities thereof ware tested. The description thereof will be as follows.

### <Dental Resin Material>

Here, prepared were four types of pasty (uncured) dental resin materials, pastes 1 to 4. A syringe was filled with each paste so that each paste could be injected into a mold.

Consistency of each paste was measured. The consistency measurement (mm) was carried out as follows: pushing a paste out of the syringe by 1.0 mL to put it on cellophane; covering the paste with cellophane gently; then, putting a cover glass and a weight whose total weight was 750 g on the covered paste gently; letting them stand still for sixty seconds; and as soon as sixty seconds had passed, removing the cover glass and the weight and measuring the lengths of long and short sides of the spreading paste, to decide that the average be the consistency (mm).

Table 1 represents the composition and consistency of each paste. MPTS in Table 1 means γ-methacryloxyprolyltriethoxysilane.

### [Table 1]

**(TABLE 1)**

| | CONTENTS | | CONSISTENCY (mm) |
|---|---|---|---|
| | COMPOSITION | wt% | |
| PASTE 1 | Monomer 1 | 36 | 68 |
| | Silica impalpable powder | 0.9 | |
| | Aluminosilicate glass, where 4 wt% MPTS treatment was carried out (average grain size 1.0 µm) | 63.1 | |
| PASTE 2 | Monomer 2 | 29.2 | 53 |
| | Fluoroaluminosilicate glass, where 3 wt% MPTS treatment was carried out (average grain size 0.8 µm) | 70.8 | |
| PASTE 3 | Monomer 3 | 34.2 | 47 |
| | Strontium glass, where 11 wt% MPTS treatment was carried out (average grain size 0.2 µm) | 65.8 | |
| PASTE 4 | Monomer 4 | 34.2 | 30 |
| | Barium glass, where 12 wt% MPTS treatment was carried out (average grain size 0.7 µm) | 65.8 | |

Monomers 1 to 4 in Table 1 are as represented in the following Table 2. It is noted that abbreviated names used in Table 2 mean the following chemical substances:
UDMA: urethanedimethacrylate
TEGDMA: triethyleneglycoldimethacrylate
BPO: benzoylperoxide
Bis-MEPP: 2,2-bis(4-methacryloxypolyethoxyphenyl)propane
HDMP: 2-hydroxy-1,3-dimethacryloxypropane

### [Table 2]

**(TABLE 2)**

| | COMPOSITION | |
|---|---|---|
| | CONTENTS | AMOUNT (part by weight) |
| MONOMER 1 | UDMA | 80 |
| | TEGDMA | 20 |
| | BPO | 1.5 |
| MONOMER 2 | UDMA | 60 |
| | Bis-MEPP | 20 |
| | HDMP | 20 |
| | BPO | 1.5 |
| MONOMER 3 | UDMA | 50 |
| | Bis-MEPP | 30 |
| | TEGDMA | 20 |
| | BPO | 1.5 |
| MONOMER 4 | UDMA | 60 |
| | Bis-MEPP | 40 |
| | BPO | 1.5 |

### < Example 1>

In Example 1, vacuum molding was carried out on a polypropylene sheet of 1 mm in thickness, to obtain a cavity 12 mm × 14 mm in length and width, and 20 mm in depth. The paste 1 was gently injected into this cavity, to fill the inside of the cavity without any gap. The mold filled with the paste 1 was fixed in an autoclave (manufactured by KYOSIN ENGNIEERING CORPORATION). Then, nitrogen whose concentration was 99.9% was substituted three times under 0.3 MPa, to make oxygen concentration less than 1.0%.

After that, pressure was raised with nitrogen to 2.0 MPa. At the same time when the pressure rising was completed, the temperature inside the reactor was raised to 120°C, and polymerization and cure were carried out for one hour. After one hour had passed, the pressure was made to decrease to the atmospheric pressure. After the temperature inside the reactor was cooled down to at least 60°C, the mold was taken out and a polymerized dental resin block was pulled out of the mold.

### < Example 2>

In Example 2, the same mold as Example 1 was used. The paste 2 was gently injected into this mold, to fill the inside of the cavity without any gap. The mold filled with the paste 2 was fixed in an autoclave (manufactured by KYOSIN ENGNIEERING CORPORATION). Then, nitrogen whose concentration was 99.9% was substituted three times under 0.3 MPa, to make oxygen concentration less than 1.0%.

After that, pressure was raised with nitrogen to 3.0 MPa. At the same time when the pressure rising was completed, the temperature inside the reactor was raised to 120°C, and polymerization and cure were carried out for one hour. After one hour had passed, the pressure was made to decrease to the atmospheric pressure. After the temperature inside the reactor was cooled down to at least 60°C, the mold was taken out and a polymerized dental resin block was pulled out of the mold.

### < Example 3>

In Example 3, a dummy block 12 mm × 14 mm × 18 mm in length, width and height, was embedded in Fusion II Wash Type (GC CORPORATION), which was a dental silicone impression material. This dummy block was taken out after cure, to obtain a cavity. The paste 3 was gently injected into this cavity, to fill the inside of the cavity without any gap. The mold filled with the paste 3 was fixed in an autoclave (manufactured by KYOSIN ENGNIEERING CORPORATION). Then, nitrogen whose concentration was 99.9% was substituted three times under 0.3 MPa, to make oxygen concentration less than 1.0%.

After that, pressure was raised with nitrogen to 3.0 MPa. At the same time when the pressure rising was completed, the temperature inside the reactor was raised to 120°C, and polymerization and cure were carried out for one hour. After one hour had passed, the pressure was made to decrease to the atmospheric pressure. After the temperature inside the reactor was cooled down to at least 60°C, the mold was taken out and a polymerized dental resin block was pulled out of the mold.

### < Example 4>

In Example 4, the same mold as Example 1 was used. The paste 4 was gently injected into this mold, to fill the inside of the cavity without any gap. The mold filled with the paste 4 was fixed in an autoclave (manufactured by KYOSIN ENGNIEERING CORPORATION). Then, nitrogen whose concentration was 99.9% was substituted three times under 0.3 MPa, to make oxygen concentration less than 1.0%.

After that, pressure was raised with nitrogen to 4.0 MPa. At the same time when the pressure rising was completed, the temperature inside the reactor was raised to 120°C, and polymerization and cure were carried out for one hour. After one hour had passed, the pressure was made to decrease to the atmospheric pressure. After the temperature inside the reactor was cooled down to at least 60°C, the mold was taken out and a polymerized dental resin block was pulled out of the mold.

### <Comparative Example 1>

The paste 1 was gently injected into an aluminum mold that was disassemblable, to fill the inside of the mold without any gap. A dental resin block was manufactured under the same conditions as Example 1 except a material of the mold.

### <Comparative Example 2>

The paste 2 was gently injected into a stainless (SUS303) mold that was disassemblable, to fill the inside of the mold without any gap. A dental resin block was manufactured under the same conditions as Example 2 except a material of the mold.

### < Comparative Example 3>

Compared with Example 4, pressure was raised with nitrogen to 0.9 MPa. All conditions except this were same as Example 4.

Table 3 lists the main conditions of Examples 1 to 4 and Comparative Examples 1 to 3.

### [Table 3]

**(TABLE 3)**

| | PRESSURE | TEMPERATURE | MATERIAL OF MOLD | ATMOSPHERE |
|---|---|---|---|---|
| EXAMPLE 1 | 2.0 MPa | 120°C | Polypropylene | Nitrogen |
| EXAMPLE 2 | 3.0 MPa | 120°C | Polypropylene | Nitrogen |
| EXAMPLE 3 | 3.0 MPa | 120°C | Silicone | Nitrogen |
| EXAMPLE 4 | 4.0 MPa | 120°C | Polypropylene | Nitrogen |
| COMPARATIVE EXAMPLE 1 | 2.0 MPa | 120°C | Aluminum | Nitrogen |
| COMPARATIVE EXAMPLE 2 | 3.0 MPa | 120°C | SUS303 | Nitrogen |
| COMPARATIVE EXAMPLE 3 | 0.9 MPa | 120°C | Polypropylene | Nitrogen |

The following tests were carried out on a dental resin block obtained from each example.

### <Moldability>

It was checked whether the taken dental resin block had no gap, and had a shape that was proper and same as the inside of the mold.

### <Cracks and Bubbles>

Ten sheets that are obtained by slicing the taken dental resin block by 1 mm in thickness were observed with a ×7 loupe, to observe whether there were cracks or bubbles.

### <Flexural Strength>

After twenty-four hours or over had passed since polymerization, a dental resin block was cut out so as to be 1.2 mm ± 0.2 mm in thickness, 4.0 mm ± 0.2 mm in width and 14 mm or more in length. The surface of the cut-out dental resin block was made to be even with waterproof abrasive paper number 1000. Then, a three point flexural test was carried out on the dental resin block under conditions of the distance between supporting points 12 mm and the crosshead speed 1.0 mm/min.

The result thereof is represented in Table 4.

### [Table 4]

**(TABLE 4)**

| | MOLDABILITY | CRACKS | BUBBLES | FLEXURAL STRENGTH |
|---|---|---|---|---|
| EXAMPLE 1 | Good | Not perceived | Not perceived | 234 MPa |
| EXAMPLE 2 | Good | Not perceived | Not perceived | 218 MPa |
| EXAMPLE 3 | Good | Not perceived | Not perceived | 184 MPa |
| EXAMPLE 4 | Good | Not perceived | Not perceived | 243 MPa |
| COMPARATIVE EXAMPLE 1 | Gaps perceived | Perceived | Not perceived | |
| COMPARATIVE EXAMPLE 2 | Gaps perceived | Perceived | Not perceived | |
| COMPARATIVE EXAMPLE 3 | Good | Not perceived | Perceived (many) | 121 MPa |

As to Example 1, the consistency of the paste 1 before cure was 68 mm, which meant this paste 1 had the highest fluidity. Obtained was a dental resin block having good moldability, having no cracks or bubbles perceived, and having a shape that was even and just as the mold. As to the flexural strength, a good value of 234 MPa was shown with 64 wt% of fillers (silica powder 0.9 wt% + aluminosilicate glass, where MPTS treatment was carried out, 63.1 wt%).

As to Example 2, the consistency of the paste 2 before cure was 53 mm, which meant this paste 2 had comparatively high fluidity. Obtained was a dental resin block having good moldability, having no cracks or bubbles perceived, and having a shape that was even and just as the mold. As to the flexural strength, a good value of 218 MPa was shown with 70.8 wt% of fillers.

As to Example 3, the consistency of the paste 3 before cure was 47 mm, which meant this paste 3 had comparatively low fluidity. Obtained was a dental resin block having good moldability, having no cracks or bubbles perceived, and having a shape that was even and just as the mold. As to the flexural strength, a good value of 184 MPa was shown with 65.8 wt% of fillers.

As to Example 4, the consistency of the paste 4 before cure was 30 mm, which meant this paste 4 had the lowest fluidity. Obtained was a dental resin block having good moldability, having no cracks or bubbles perceived, and having a shape that was even and just as the mold. As to the flexural strength, a good value of 243 MPa was shown with 65.8 wt% of fillers.

As to Comparative Example 1, the moldability was bad and the appearance of some gaps was perceived, differently from Example 1. Further, cracks were perceived on the surface of or inside the dental resin block. It is noted however that there were no bubbles perceived inside the dental resin block. A specimen for the flexural test could not be made because of the bad moldability and the appearance of cracks.

As to Comparative Example 2, the moldability was bad and the appearance of some gaps was perceived, differently from Example 2. Further, cracks were perceived on the surface of or inside the dental resin block. It is noted however that there were no bubbles perceived inside the dental resin block. A specimen for the flexural test could not be made because of the bad moldability and the appearance of cracks.

As to Comparative Example 3, there were many bubbles perceived inside the dental resin block, differently from Example 4. The flexural test was carried out, but the value was low because of many bubbles.

### Reference Signs List

1 mold

## Claims

1. A method for manufacturing a dental resin block, the method comprising:
injecting a material before cure that is to be a dental resin block into a mold that has an aperture configured to make the pressure inside and outside the mold same and wherein the mold is formed by synthetic resin;
putting the mold with the material before cure that is to be a dental resin block into a vessel with which whole of the composition and the mold can have a predetermined pressure, and
pressurizing the mold and the material before cure, which is injected into the mold, with a pressure of 1.0 MPa or more; and
heating the mold and the material before cure, which is injected into the mold, with a temperature of 60°C or more, at the same time when the pressure has been raised, to be polymerized under the situation where the pressure inside and outside the mold is the same.

## Patentansprüche

1. Verfahren zum Herstellen eines Dentalharzblocks, das Verfahren umfassend:
Einspritzen eines Materials vor Härtung, das ein Dentalharzblock werden soll, in eine Form, die eine Öffnung aufweist, die konfiguriert ist, den Druck innerhalb und außerhalb der Form gleich zu machen, und wobei die Form aus synthetischem Harz geformt ist;
Einbringen der Form mit dem Material vor Härtung, das ein Dentalharzblock werden soll, in ein Gefäß, mit dem die Gesamtheit der Zusammensetzung und der Form einen vorbestimmten Druck aufweisen kann, und
Unterdrucksetzen der Form und des Materials vor Härtung, welches in die Form eingespritzt ist, mit einem Druck von 1,0 MPa oder mehr; und
Erwärmen der Form und des Materials vor Härtung, welches in die Form eingespritzt ist, mit einer Temperatur von 60°C oder mehr, zur gleichen Zeit, wenn der Druck erhöht worden ist, um unter der Situation, bei welcher der Druck innerhalb und außerhalb der Form der gleiche ist, polymerisiert zu werden.

## Revendications

1. Procédé de fabrication d'un bloc de résine dentaire, le procédé comprenant :
injecter un matériau avant durcissement amené à être un bloc de résine dentaire dans un moule qui comprend une ouverture configurée pour que la pression à l'intérieur et à l'extérieur du moule soit la même et où le moule est formé d'une résine synthétique ;
mettre le moule avec le matériau avant durcissement amené à être un bloc de résine dentaire dans un récipient avec lequel l'ensemble de la composition et du moule peut avoir une pression prédéterminée ; et
pressuriser le moule et le matériau avant durcissement, qui est injecté dans le moule, à une pression de 1,0 MPa ou plus ; et
chauffer le moule et le matériau avant durcissement, qui est injecté dans le moule, à une température de 60°C ou plus, en même temps quand la pression a été augmentée, pour être polymérisé dans la situation où la pression à l'intérieur et à l'extérieur du moule est la même.
